# EUROPEAN PATENT APPLICATION

(11) **EP 0 810 387 A2**
(43) Date of publication of application: **03.12.1997**
(21) Application number: 97303291.5
(22) Date of filing: 14.05.1997
(51) Int. Cl.: F16F 13/10

(54) **Hydraulically damped mounting device**

(30) Priority: 30.05.1996 GB 9611293
(71) Applicant: JAGUAR CARS LIMITED, Allesley Coventry CV5 9DR West Midlands (GB)
(72) Inventor: Preece, Garry James, Claverdon, Warwickshire CV35 8LL (GB)
(74) Representative: Watts, Peter Graham

(57) **Abstract**

A hydraulically damped mounting device (10) has a pair of axially separated members (11, 13) interconnected by an elastomeric body (25). The elastomeric body (25) defines a closed chamber (26) for hydraulic fluid, the chamber (26) being divided in two, an aperture (29) being provided in the barrier (27) between the two parts of the chamber (26) to control flow of fluid therebetween, upon compression and extension of the elastomeric body (25). A flexible sheath (40) is secured at one end (42) to one of the mounting members (11) and at the other end (45) to the other of the mounting members (13), so that the flexible sheath (40) will permit relative axial movement of the mounting members (11, 13) over the full working range of the mounting device (10).

## Description

The present invention relates to a hydraulically damped mounting device and in particular to a mounting device comprising a pair of mounting members separated axially by an elastomeric body, the elastomeric body defining a chamber for hydraulic fluid, means being provided to control movement of the fluid within the chamber in response to compression and extension of the elastomeric body, to generate damping loads which will oppose compression and extension of the elastomeric body.

Such mounting devices are often used in applications, for example the mounting of motor vehicle engines, where they are exposed to thermal radiation, which will cause the elastomeric body to deteriorate, adversely affecting the life of the device. UK Patent GB 2,206,947 discloses the use of a cover which substantially surrounds the elastomeric body to protect it from thermal radiation.

There is also a requirement with such mounting devices to provide means to limit axial separation of the mounting plates, so that excessive tensile loads will not tear the elastomeric body apart or cause it to separate from one or both mounting plates. US Patent, 5,316,275 discloses a hydrodynamically damped mounting device with a metal sleeve which surrounds the elastomeric body and forms an abutment, which will limit separation of the mounting members. The metal sleeve of the device disclosed in this patent will also act as a heat shield protecting the elastomeric body from thermal radiation.

In accordance with the US patent, the metal sleeve must be sufficiently long to accommodate the elastomeric body at its maximum extension. Furthermore, in order to permit compression of the elastomeric body, an extension is required between the elastomeric body and one of the mounting members, the extension extending freely through the end of the sleeve defining the abutment, so that said mounting member may move freely with respect to the metal sleeve over the full range of operation of the mounting device. As a result of these requirements, the over all height of the mounting device is increased significantly, which may result in packaging problems.

According to one aspect of the present invention a hydraulically damped mounting device comprises a pair of axially separated mounting members interconnected by an elastomeric body, the elastomeric body defining a closed chamber for hydraulic fluid, means being provided to control movement of the hydraulic fluid in the chamber in response to compression and extension of the elastomeric body, characterised in that a flexible sheath is secured at one end to one of said mounting members and at the other end to the other of said mounting members, said flexible sheath permitting relative axial movement of the mounting members over the full working range of the mounting device.

With the device described above, as the sheath is secured to both mounting members and is flexible, it will permit the mounting members to move relative to one another over the full working range of the mounting device without any increase of the height of the device. Also the sheath will act as a heat shield protecting the elastomeric body from thermal radiation. Furthermore, the sheath forms a complete enclosure around the elastomeric body preventing the ingress of dirt and moisture and thus further protecting the mounting device.

The invention is now described, by way of example only, with reference to the accompanying drawings, in which:-
Figure 1 illustrates in part section, a hydraulically damped mounting device in accordance with the present invention;
Figure 2 is a view similar to Figure 1 of a modification to the embodiment illustrated in Figure 1;
Figure 3 illustrates in part section a further embodiment of the present invention; and
Figure 4 shows a developed plan view of the flexible sheath of the embodiment illustrated in Figure 3.

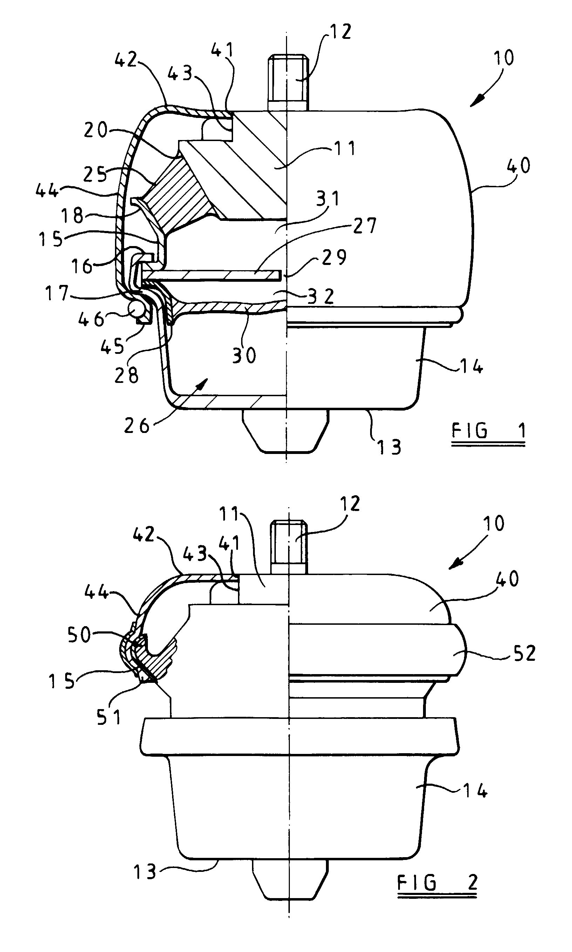

As illustrated in Figure 1, a hydraulically damped mounting device 10 comprises a first mounting member 11 having a stud formation 12 by which it may be secured to one component, for example the engine of a motor vehicle. A second mounting member 13 is adapted to be secured to a second component, for example a vehicle sub-frame, by means (not shown). The second mounting member 13 is dished, forming a casing 14 for the hydraulic damping mechanism.

An annular support plate 15 is crimped between the periphery 16 and a shoulder portion 17 of the casing 14. The support plate 15 extends outwardly from the casing 14, the outer portion 18 of support plate 15 being of frustoconical configuration, opening outwardly away from the casing 14.

An opposed face 20 of the mounting member 11 is a similar frustoconical configuration to portion 18 of support plate 15. An annular elastomeric body 25 is bonded at one end to portion 18 of support plate 15 and at the other end to face 20 of mounting member 11. The mounting members 11 and 13 are thereby resiliently mounted with respect to each other.

The elastomeric body 25 and casing 14 define a chamber 26. The chamber 26 is divided by a plastic diaphragm 27 which is clamped between the support plate 15 and a second support plate 28, between the crimped periphery 16 and shoulder portion 17 of casing 14. Suitable sealing means (not shown) are provided between the casing 14 and support plate 15; the support plate 15 and diaphragm 27; and the diaphragm 27 and support plate 28, to provide fluid-tight seals therebetween. An orifice 29 is provided in the diaphragm 27.

An elastomeric diaphragm 30 is bonded around its periphery to the support plate 28. The metal diaphragm 27 will thereby divide the chamber 26 into two compartments 31 and 32, interconnected by the orifice 29. The compartments 31 and 32 are filled with a hydraulic fluid.

In operation, when the engine of the vehicle moves towards the sub-frame, it will compress the elastomeric body 25. Compression of the elastomeric body 25 will cause compartment 31 to decrease in volume, forcing hydraulic fluid through the orifice 29 into compartment 32. The elastomeric diaphragm 30 permits compartment 32 to expand to accommodate the additional hydraulic fluid. Upon rebound of the engine under the spring force applied by the elastomeric body 25, as the elastomeric body 25 relaxes, the volume of compartment 31 increases and hydraulic fluid must be drawn back into the compartment 31 through orifice 29. Movement of the hydraulic fluid will thus impose a mass damping action on movement of the engine relative to the sub-frame.

As illustrated in Figure 1, a flexible sheath 40 is connected between the first mounting member 11 and the second mounting member 13, so that it surrounds the elastomeric body 25 thereby protecting it from thermal radiation and also tying the mounting member 11 to the mounting member 13, restricting the amount by which the mounting members 11 and 13 may move apart.

The flexible sheath 40 is of cup shape configuration having an aperture 41 in its base 42 which is located about a neck formation 43 on the mounting member 11, so that it will be clamped between the mounting member 11 and the component to which the mounting member 11 is secured, when the mounting member 11 is secured to said component.

The open end of the skirt portion 44 of the flexible sheath 40 is provided with a bead formation 45 which resiliently engages over the shoulder formation 17 of the mounting member 13. A spring clip 46 is provided to engage the bead formation 45 to retain it in position. Alternatively, the open end of the skirt formation 44 may be formed with an integral wire bead formation which is of smaller diameter than the shoulder portion 17, the bead formation being forced over the shoulder portion 17, to retain the flexible sheath 40 in engagement with the mounting member 13.

The flexible sheath 40 is dimensioned so that under normal operation of the mounting device 10, the flexible sheath 40 is not extended to the point that it comes into tension. If, however, the elastomeric body 25 fails, so that mounting members 11 and 13 can separate, the flexible sheath 40 will prevent absolute separation and will control the degree of separation permitted under such circumstances. The flexible sheath 40 may alternatively be used to limit the extension of the mounting device 10 during normal operation, to ensure an extended life for the component.

The flexible sheath 40 may be made of any flexible material which is capable of withstanding temperatures to which the mounting device 10 is to be exposed. The material is preferably reinforced in order to withstand forces which may be applied to the flexible sheath 40 should the elastomeric body 25 fail or the mounting device 10 be subjected to exceptional loads separating the mounting members 11 and 13. Suitable materials include fibre reinforced moulded rubber or plastics materials. The fibre reinforcement is preferably orientated to withstand the loads applied to the flexible sheath 40 as members 11 and 13 move apart.

Reinforcing elements of for example metal or rigid plastics material may also be moulded into the flexible sheath 40 to provide local reinforcement and/or for anchoring and fixing purposes.

In the modified embodiment illustrated in Figure 2, the outer portion 50 of support plate 15 is extended and is turned back inwardly. The flexible sheath 40 which is provided with a bead formation 51 is then secured to the outer portion 50 of support plate 15, by means of a manacle ring 52. The manacle ring 52 is bonded to the periphery of the skirt portion 44 of flexible sheath 40 and is swaged into engagement with the outer portion 50 of support plate 15.

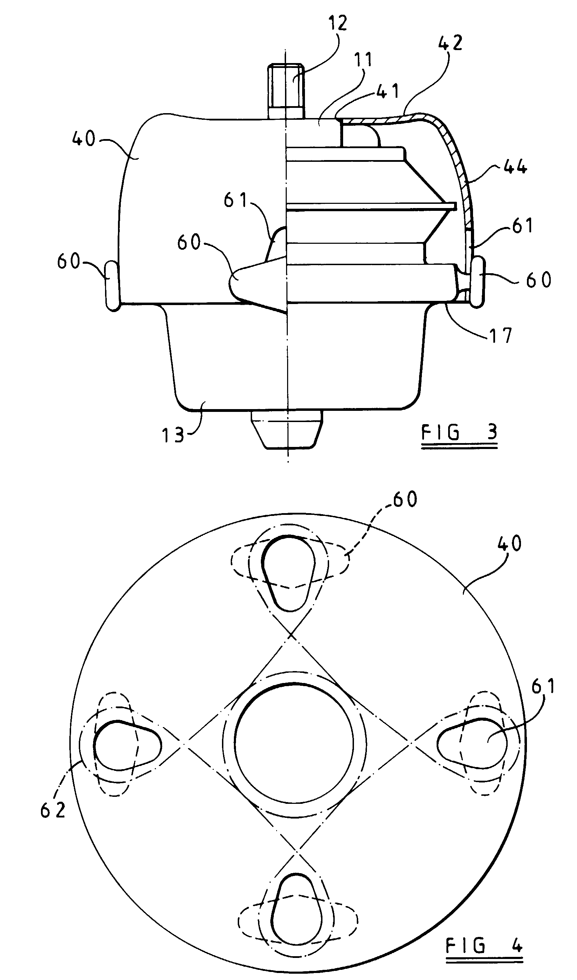

In the embodiment illustrated in Figures 3 and 4, the flexible sheath 40 is secured to mating member 11 in similar manner to the embodiments illustrated in Figures 1 and 2. The flexible sheath 40 is however secured to mounting member 13, by means of four angularly spaced button formations 60. The button formations 60 extend from the enlarged diameter shoulder portion 17 of mounting member 13 and engage apertures 61 in the skirt portion 44 of flexible sheath 40. The button formations 60 are elongate circumferentially of the mounting member 10, while apertures 61 are elongate axially of the mounting member 10, in order to facilitate engagement of the button formations 60 in the aperture 61 while avoiding inadvertent disengagement thereof.

As illustrated in Figure 4, reinforcing fibres or cords 62 are orientated so that they are wound about the apertures 61. The reinforcing fibres 62 will thereby provide for reinforcement of the apertures 61, when loads are transmitted from the button formation 60 to the flexible sheath 40.

In accordance with the present invention as described with reference to the above embodiments, relative movement of the mounting members 11 and 13 during normal operation of the mounting device 10, is accommodated by flexing of the flexible sheath 40. There is consequently no need to increase the axial dimension of the mounting device 10 as is required by US Patent 5,316,275.

## Claims

1. A hydraulically damped mounting device (10) comprising a pair of axially separated mounting members (11, 13) interconnected by an elastomeric body (25), the elastomeric body (25) defining a closed chamber (26) for hydraulic fluid, means (29) being provided to control movement of the hydraulic fluid in the chamber (26) in response to compression and extension of the elastomeric body (25), characterised in that a flexible sheath (40) is secured at one end (42) to one of said mounting members (11) and at the other end (45) to the other of said mounting members (13), said flexible sheath (40) permitting relative axial movement of the mounting members (11, 13) over the full working range of the mounting device (10).

2. A hydraulically damped mounting device (10) according to Claim 1 characterised in that the flexible sheath (40) is of cup shaped configuration having a base portion (42) and a skirt formation (44), an aperture (41) being provided in the base portion (42) for engagement of a neck formation (43) on one of said mounting members (11), the periphery of the skirt formation (44) remote from the base portion (42) being secured to the other mounting member (13).

3. A hydraulically damped mounting device (10) according to Claim 2 characterised in that a bead formation (45) around said periphery of the skirt formation (44) engages over an enlarged diameter portion (17) of said other mounting member (13).

4. A hydraulically damped mounting device (10) according to Claim 3 characterised in that a spring clip (46) engages the bead formation (45) to urge it into engagement with said other mounting member (13).

5. A hydraulically damped mounting device (10) according to Claim 3 characterised in that a wire bead is moulded around said periphery of the skirt formation (44), the wire bead being of smaller diameter than the enlarged diameter portion (17) of said other mounting member (13), the wire bead being forced over said enlarged diameter portion (17) of said other mounting member (13).

6. A hydraulically damped mounting device (10) according to Claim 2 characterised in that said periphery of the skirt formation (44) is secured to said other mounting member (13) by means of a manacle ring (52), the manacle ring (52) being mounted coaxially of said other mounting member (13) or a formation secured to said other mounting member (13) with the skirt formation (44) of the flexible sleeve (40) therebetween, the manacle ring (52) being swaged onto said other mounting member (13) or the formation secured thereto.

7. A hydraulically damped mounting device (10) according to Claim 6 characterised in that the manacle ring (52) is bonded to the skirt formation (44).

8. A hydraulically damped mounting device (10) according to Claim 2 characterised in that a plurality of angularly spaced apertures (61) in the skirt formation (44) of the flexible sheath (40) engage correspondingly spaced button formations (60) on said other mounting member (13).

9. A hydraulically damped mounting device (10) according to Claim 8 in which the button formations (60) are elongate circumferentially of said other mounting member (13).

10. A hydraulically damped mounting device (10) according to Claim 8 or 9 characterised in that said apertures (61) are elongate axially of the skirt formation (44).

11. A hydraulically damped mounting device (10) according to any one of the preceding claims characterised in that the flexible sheath (40) is formed from fibre reinforced rubber or plastics material.

12. A hydraulically damped mounting device (10) according to Claim 11 characterised in that the fibre reinforcement (62) is orientated to withstand loads applied to the flexible sheath (40) as the mounting members (11, 13) move apart.
